# EUROPÄISCHE PATENTSCHRIFT

(11) **EP 0 899 390 B1**
(45) Veröffentlichungstag und Bekanntmachung des Hinweises auf die Patenterteilung: **04.06.2003**
(21) Anmeldenummer: 97115093.3
(22) Anmeldetag: 01.09.1997
(51) Int. Cl.: E04B 1/74

(54) **Holzpellets zur Wärme- und Schalldämmung**
Woodpellets for warmth- and sound proofing
Granulés de bois comprimés pour l'insonorisation et l'isolation thermique

(43) Veröffentlichungstag der Anmeldung: 03.03.1999
(73) Patentinhaber: Gurtner, Johann, Dipl.-Ing., 4922 St. Marienkirchen (AT)
(72) Erfinder: Gurtner, Johann, Dipl.-Ing., 4922 St. Marienkirchen (AT)
(74) Vertreter: Dupal, Helmut, Dipl.-Ing.

(56) Entgegenhaltungen:
- DE-U- 9 411 023
- FR-A- 2 499 551
- US-A- 4 612 017
- PATENT ABSTRACTS OF JAPAN vol. 012, no. 160 (M-697), 14.Mai 1988 & JP 62 279051 A (WHITE OAK:KK), 3.Dezember 1987,

## Beschreibung

Die Erfindung bezieht sich auf ein Verfahren zur Herstellung eines Dämmaterials für die Wärme- und Schalldämmung im Baubereich, zur Isolierung von Wand- und Decke.

Solche Dämmstoffe werden zunehmend im Bauwesen eingesetzt, z.B. lose verfüllt in Hohlräume von Wänden, Decken oder Fußböden, vor allem in aus Holz aufgebauten hohlen Bauteilen.

Aus der DE 94 11 023 U ist es bekannt, Sägespänematerial, das in Hohlwände durch Einblasen eingefüllt wird, vorher durch Tränken oder Impregnieren mit Borsalz gegen den Befall von Schimmelpilzen und Ungeziefer und gegen Einnistung von Mäusen zu schützen.

Im Dämmbereich wird gerade bei Holzbalkendecken versucht durch Kies, wegen dessen hohen Raumgewichtes, die Trittschall zu verbessern und benötigt dann noch ein zusätzliches Wärmedämmmaterial als Wärmedämmschicht, was zusätzlichen Material- und Kostenaufwand, besonders für die Verlegung, bedeutet.

Aus der FR-A 2 499 551 ist ein Verfahren bekannt, bei dem Holzabfälle und allgemein Holzzelluloseabfälle für die Herstellung eines Materials zerkleinert werden, das dann chemisch und thermisch behandelt wird, sodaß bei Einbettung in ein mineralisches Bindematerial die Mikroporosität des Holzes erhalten bleibt, wodurch ein wärme- und schallisolierendes Dämmaterial erhalten wird.

Aufgabe der Erfindung ist es, ein einfaches Verfahren, mit geringem Aufwand, zur Herstellung eines Dämmaterials sowohl für die Wärme- als auch zur Schalldämmung im Baubereich, zur Isolierung von Wand- und Decke zu schaffen, das zusätzlich zu den wärmedämmenden Eigenschaften ein genügendes Raumgewicht für die Schalldämmung erreich und gut rieselfähig ist.

Diese Aufgabe wird bei einem Verfahren nach dem Gattungsbegriff des Anspruches 1 mit den Merkmalen des kennzeichnenden Teiles des Anspruches 1 gelöst.

Die Unteransprüche betreffen besonders vorteilhafte Ausgestaltungen der Erfindung, die wichtige Teilaufgaben der Aufgabenstellung lösen oder verbessern.

Die aus herkömmlichen Holzpreßlingen, sog. Pellets, aus Weichholz, wie sie üblicherweise als Heizmaterial verwendet werden und die einen Durchmesser von 6 mm und eine Länge von 3 cm, werden mit Riffelwalzen auf ein Raumgewicht von 400 kg/m³ zerkleinert.

Die Eigenschaften des Erfindungsgemäßen Dämmaterials können durch Versetzen mit 1 kg/m³ Natriumborat verbessert werden.

Durch die verfahrensgemäße Zerkleinerung von Holzpellets der beschriebenen Abmessungen mit Riffelwalzen, erhält man ein Dämmaterial das gut rieselfähig ist und kann daher im Silo zur Baustelle transportiert und vor Ort eingepumpt, bzw. in der Fertighauserzeugung; im Betrieb vom Silo mit Schwerkraft in Deckenelemente eingefüllt werden.

Das verfahrensgemäß hergestellte Dämmaterial ermöglicht es, Häuser in Riegelbauweise auch mit Holz zu Dämmen und so ein Holzhaus zu bauen mit wesentlich größerem Kostenvorteil gegenüber vergleichbarer Blockbauweise.

## Patentansprüche

1. Verfahren zur Herstellung eines Dämmaterials für die Wärme- und Schalldämmung im Baubereich, zur Isolierung von Wand- und Decke, **dadurch gekennzeichnet, daß** Holzpellets aus Weichholz, mit einem Durchmesser von 6 mm und einer Länge von 30 mm und einem Raumgewicht von 600 kg/m³ mit Riffelwalzen zu einem Dämmaterial von einem Raumgewicht von ca. 400 kg/m³ zerkleinert werden.

2. Verfahren zur Herstellung eines Dämmaterials nach Anspruch 1, **dadurch gekennzeichnet, daß** die Zerkleinerung der Holzpellets zu einem gut rieselfähigen Dämmaterial erfolgt, das das Einpumpen auf der Baustelle oder in der Fertigteilhauserzeugung und das Füllen mit Schwerkraft in Deckenelemente gestattet.

3. Verfahren zur Herstellung eines Dämmaterials nach Anspruch 1, **dadurch gekennzeichnet, daß** nach der Zerkleinerung der Holzpellets zu dem Dämmaterial, dieses mit Natriumborat in der Menge von 1 kg pro m³ versetzt wird.

## Claims

1. Process of production of insulation material for heat and noise used in the building trade for the insulation of walls and ceilings, **characterised in that** wood pellets made of soft wood with a diameter of 6 mm and a length of 30 mm and a weight of cubic content of 600 kg/m3 are reduced to an insulation material of a weight of cubic content of 400 kg/m3 by means of fluted rollers.

2. Process according to claim 1, **characterised in that** the reduction of the wood pellets to a good trickling insulation material takes place which enables pumping of said insulation material on the construction site or during the production of buildings made of prefabricated parts and the filling of ceiling elements by gravity.

3. Process according to claim 1, **characterised in that** after the reduction of the wood pellets to said insulation material has taken place it will be treated with sodium-borate in a quantity of 1 kg per m3.

## Revendications

1. Procédé pour la production d'un matériel d'isolation de la chaleur et du bruit en métier des bâtiments, des murs et des plafonds, **caractérisée en ce que** pièces minimes de bois tendre avec un diamètre de 6 mm et une longueur de 30 mm et d'un poid de cubage de 600 kg/m3 sont broyées à l'aide des rouleaux cannelés à un matériel d'isolation d'un poid de cubage de 400 kg per m3.

2. Procédé selon revendication 1, **caractérisée en ce que** le broyage des pièces minimes se produise au matériel d'isolation s'écoulant si bien, que permet le remplissage par pomper à la chantier de construction ou en production des bâtiments de part préfabriqués et le remplissage dans des éléments de plafond par la gravitation.

3. Procédé selon revendication 1, **caractérisée en ce que** après de la broyage des les pièces minimes au matériel d'isolation, ce-que est traité avec borate de sodium d'une dose de 1 kg par m3.
